# EUROPÄISCHE PATENTSCHRIFT

(11) **EP 4 019 379 B1**
(45) Veröffentlichungstag und Bekanntmachung des Hinweises auf die Patenterteilung: **01.11.2023**
(21) Anmeldenummer: 20216395.2
(22) Anmeldetag: 22.12.2020
(51) Int. Cl.: B62K 3/00, B62K 15/00, B62K 21/12

(54) **EINKLAPPBARER LENKER**
FOLDABLE HANDLEBAR
GUIDON REPLIABLE

(43) Veröffentlichungstag der Anmeldung: 29.06.2022
(73) Patentinhaber: Driveman GmbH, 58339 Breckerfeld (DE)
(72) Erfinder: Schnippering, Axel, 58553 Halver (DE); Wiegand, Andreas, 58553 Halver (DE)
(74) Vertreter: Patentanwälte Dörner & Kötter PartG mbB

(56) Entgegenhaltungen:
- WO-A1-2020/035841
- CN-U- 203 806 080
- CN-U- 205 632 846
- JP-A- H01 237 277
- KR-A- 20080 078 092
- US-A1- 2013 167 684

## Beschreibung

Die Erfindung betrifft einen Lenker zur Befestigung an der Lenkstange eines Zweirades, insbesondere eines Elektrorollers, nach dem Oberbegriff des Patentanspruchs 1.

Mit einem Elektroantrieb versehene Roller, auch als E-Scooter bezeichnet, erfreuen sich zunehmender Beliebtheit. Diese Fahrzeuge sind kompakt ausgestaltet und durch die Möglichkeit des Umlegens der Längssäule platzsparend verstaubar. Die Vorteile dieser elektrisch angetriebenen Fahrzeuge gegenüber Kraftfahrzeugen sind im stadtnahen Bereich deutlich erkennbar. Sie sind umweltfreundlich und benötigen aufgrund ihres geringen Eigengewichtes wenig Energie. Außerdem ist ihre benötigte Stellfläche um ein Vielfaches kleiner und sie sind aufgrund ihrer Zusammenfaltbarkeit einfach zu handhaben. Roller der vorgenannten Art sind beispielsweise in der EP 2 425 989 A1 beschrieben.

Um das Packmaß eines eingeklappten Rollers zu minimieren, werden u.a. in der DE 298 03 825 A1, der EP 2 837 552 A1 sowie der EP 4 019 379 A1 unterschiedliche Mechanismen vorgeschlagen, um die beiden Griffstücke des Lenkers einzuklappen. Nachteilig an den bekannten Lösungen ist, dass diese nur eine begrenzte Stabilität aufweisen. Durch andauernde Vibrationen des Rollers im Betrieb kann es bei einigen Lösungen zu einer Lockerung zwischen Lenker und Griffstücken kommen, wodurch die Fahrsicherheit beeinträchtigt ist.

Das Dokument US 2013/167684 A1 offenbart die Merkmale der Präambel von Anspruch 1.

Hier will die Erfindung Abhilfe schaffen. Der Erfindung liegt die Aufgabe zugrunde, einen Lenker zur Befestigung an der Lenkstange eines Zweirades, insbesondere eines Elektrorollers bereitzustellen, der auch bei andauernden Vibrationen im Betrieb des Rollers eine hinreichende Stabilität gewährleistet. Gemäß der Erfindung wird diese Aufgabe durch einen Lenker mit den Merkmalen des kennzeichnenden Teils des Patentanspruchs 1 gelöst.

Mit der Erfindung ist ein Lenker zur Befestigung an der Lenkstange eines Rollers, insbesondere eines Elektrorollers bereitgestellt, der auch bei andauernden Vibrationen im Betrieb des Rollers eine hinreichende Stabilität gewährleistet.

Dadurch, dass auf dem Griffstück eine Verriegelungshülse drehbar angeordnet ist, die über ein Federelement gegen das Mittelstück vorgespannt ist und die einen radial nach innen kragenden Zapfen aufweist, der in eine an dem Griffstück angeordnete Kulissenbahn eingreift, in der er geführt ist, wobei die Kulissenbahn derart ausgebildet ist, dass die Verriegelungshülse in einer ersten Drehstellung axial auf dem Griffstück verschiebbar und in einer zweiten Drehstellung axial fixiert ist, ist eine zuverlässige Verriegelung der Position eines Griffstücks an dem Mittelstück ermöglicht.

Dabei umfasst das Griffstück ein Verbindungsstück, das die Kulissenbahn aufweist, wobei das Verbindungsstück endseitig einen Schwenkabschnitt mit zwei planparallelen Flächen aufweist, der zwischen zwei Schenkeln eingreift, die jeweils an beiden Enden des Mittelstücks vorhanden sind und zwischen denen der Schwenkabschnitt über eine Achse schwenkbar gehalten ist, die durch eine durch die Schenkel geführte Bohrung geführt ist. Hierdurch ist eine stabile Gelenkverbindung zwischen den Grifffstücken und dem Mittelstück erzielt. Das Verbindungsstück kann als separates Bauteil ausgebildet sein, das mit dem Rohr des Griffstücks verschraubt ist. Hierzu weist das Verbindungsstück bevorzugt einen Gewindezpfen auf, auf den das Rohr, vorzugsweise ein Metallrohr aufgeschraubt ist. Das Verbindungsstück kann jedoch auch einstückig als Teil des Griffstücks gebildet sein oder beispielsweise auch aus von dem Rohr des Griffstücks verschiedenem Material an dieses angeformt, insbesondere angespritzt sein.

In weiterer Ausgestaltung der Erfindung weisen die an beiden Enden des Mittelstücks angeordneten Schenkel jeweils einen Anschlag auf, an dem der Schwenkabschnitt des jeweiligen Griffstücks in "Fahrstellung", d.h. im ausgeklappten Zustand des Lenkers, anliegt. Hierdurch ist die Stabilität des Lenkers in Fahrstellung unterstützt. Der Anschlag kann beispielsweise durch einen zwischen die beiden Schenkel hineinragenden Absatz gebildet sein, er kann auch durch einen äußeren bereichsweisen Verschluss des zwischen den Schenkeln begrenzten Spaltes erzielt sein.

In Weiterbildung der Erfindung weist die Kulissenbahn einen axial verlaufenden Abschnitt auf, der in einen radial umlaufenden Abschnitt übergeht. Hierdurch ist eine axiale Verschiebung der Hülse über eine definierte Strecke sowie am Ende der Strecke eine Drehung der Hülse um einen bestimmten Winkel ermöglicht Durch eine Drehung der Hülse und dem dadurch bewirkten Einbringen des Zapfens in den radial umlaufenden Abschnitt der Kulissenbahn ist eine axiale Bewegung der Hülse blockiert.

In weiterer Ausgestaltung der Erfindung weist der radial umlaufende Abschnitt der Kulissenbahn einen axial in Richtung des Mittelstücks ansteigenden Bereich auf. Hierdurch wird beim Eindrehen des Zapfens der Verriegelungshülse in den radial umlaufenden Abschnitt zugleich eine axiale Bewegung der Verriegelungshülse erzielt. Hierduch wird die Verriegelungshülse oder ein an der Verriegelungshülse anliegendes Kupplungsstück gegen das Mittelstück verspannt, wodurch eine kraftschlüssige Festlegung des Griffstücks bewirkt ist.

In Weiterbildung der Erfindung liegt die Verriegelungshülse an ihrem dem Mittelstück zugewandten Ende an einem Kupplungsstück an, das auf dem Verbindungsstück verschiebbar ist und das an seiner dem Mittelstück zugewandten Seite eine zweite unebene Flächenkontur aufweist, die mit einer an dem Mittelstück vorhandenen ersten unebenen Flächenkontur korrespondiert, an der das Kupplungsstück in Fahrstellung des Griffteils anliegt. Hierdurch ist eine drehfeste Verbindung zwischen Kupplungsstück und Mittelstück ermöglicht. Bevorzugt weist das Mittelstück einen unrunden, vorzugsweise einen elliptischen Querschnit auf. Hierdurch ist eine große Anlagefläche zwischen Kupplungsstück und Mittelstück erzielt.

In Ausgestaltung der Erfindung ist die Verriegelungshülse mit dem Kupplungsstück drehbar verbunden. Dabei weist die Verriegelungshülse bevorzugt eine umlaufende Nut auf, in der ein zumindest bereichsweise umlaufend an dem Kupplungsteil angeordneter Kragen eingreift. Hierduch ist eine Drehung der Verriegelungshülse relativ zu dem mit dieser verbundenen Kupplungsstück ermöglicht.

In weiterer Ausgestaltung der Erfindung weist das Kupplungsstück einen radial nach innen kragenden Zapfen auf, der in eine außen an dem Verbindungsstück vorhandene, axial verlaufende Nut eingreift. Hierdurch ist das Kupplungsstück drehfest, jedoch zugleich verschiebbar mit dem Verbindungsstück verbunden.

In Weiterbildung der Erfindung ist das Federelement durch eine Schraubenfeder gebildet, die in einen zwischen dem Verbindungsstück und der Verriegelungshülse begrenzten Ringspalt angeordnet ist. Hierduch ist eine gleichmäßige Vorspannung auf die Verriegelungshülse sowie dem mit dieser verbundenen Kupplungsstück erzielt. Bei Ausgestaltung des Verbindungsstücks als separates Bauteil, das mit dem Rohr des Griffstücks verschraubt ist, kann die Schraubenfeder an einem endseitigen Bund des Rohres oder an einer an dem Rohr anliegenden Scheibe anliegen, sodass die Schraubenfeder beim Aufschrauben des Rohres auf einen Gewindezapfen des Verbindungsstücks zunehmend vorgespannt wird.

Gegenstand der Erfindung ist weiterhin ein Zweirad, inbesondere ein Elektroroller mit einer Lenkstange, die mit einem Lenker der vorstehenden Art verbunden ist.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die Darstellung eines Elektrorollers;
- Figur 2: die Detaildarstellung der Lenkstange des Elektrorollers aus Figur 1 mit Lenker in "Fahrstellung";

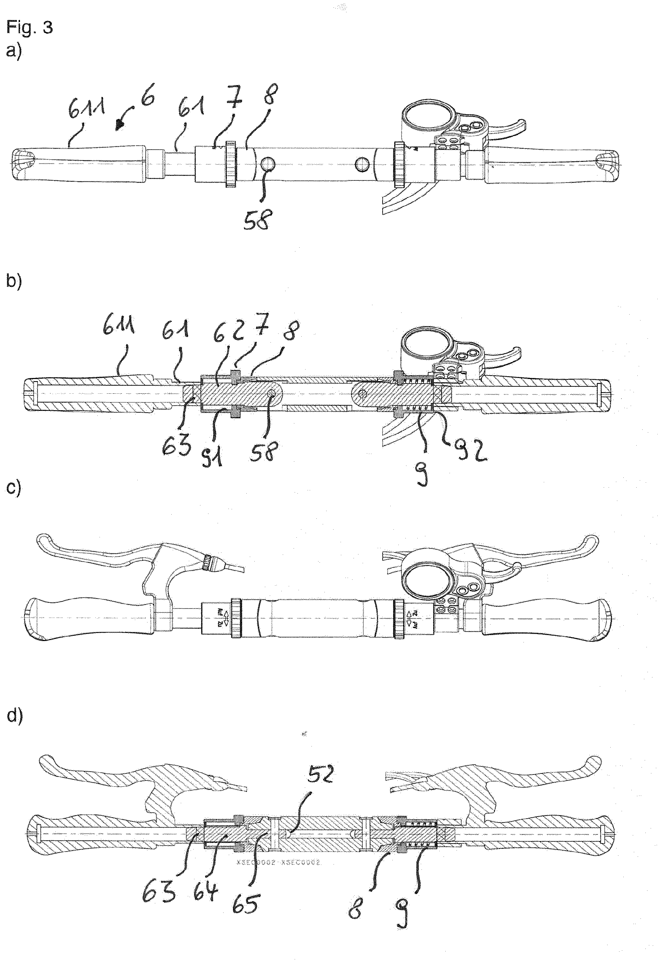

- Figur 3: Die Darstellung der Lenkstange aus Figur 2
a) in einer ersten Seitenansicht;
b) in einem ersten Längsschnitt;
c) in einer zweiten Seitenansicht;
d) in einem zweiten Längsschnitt,
- Figur 4: die Detaildarstellung der Lenkstange des Elektrorollers aus Figur 1 mit Lenker in "Faltstellung";
- Figur 5: die Darstellung Mittelstücks des Lenkers aus Figur 3
a) in der Draufsicht;
b) in einer Seitenansicht;
c) in einer räumlichen Darstellung;

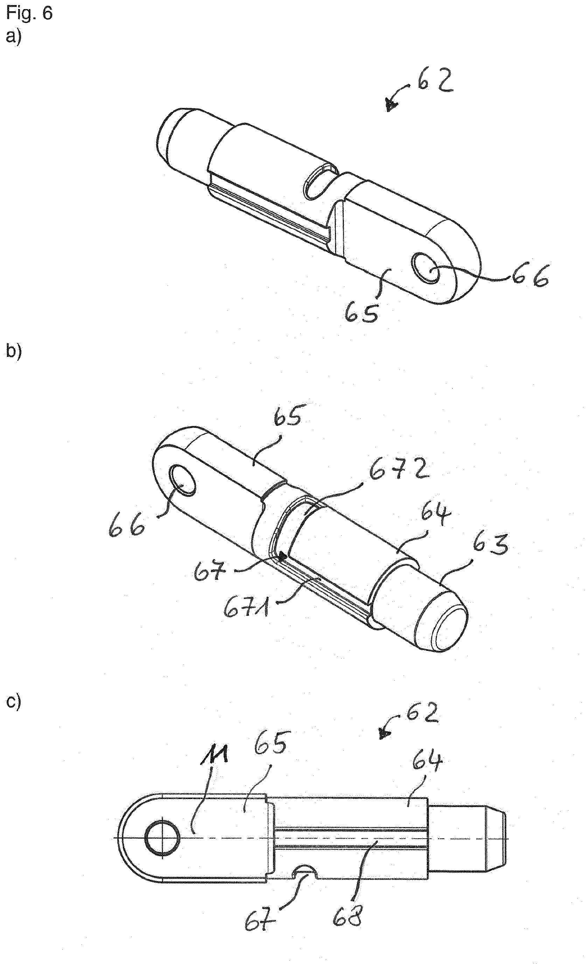

- Figur 6: die schematische Darstellung des Verbindungsstücks des Lenkers aus Figur 2
a) in einer ersten räumlichen Darstellung;
b) in einer zweiten räumlichen Darstellung:
c) in einer ersten Seitenansicht mit Führungsnut;
d) in einer zweiten Seitenansicht mit radialem Abschnitt der Kulissenbahn;
e) in einer zweiten Seitenansicht mit radialem und axialem Abschnitt der Kulissenbahn;
f) in der Ansicht von vorne
g) in der Ansicht von hinten;

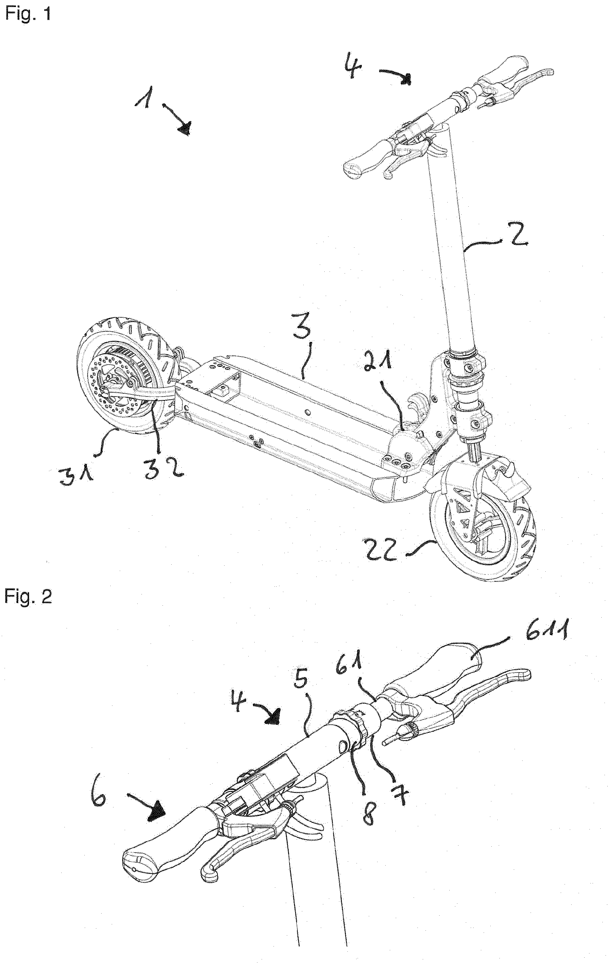

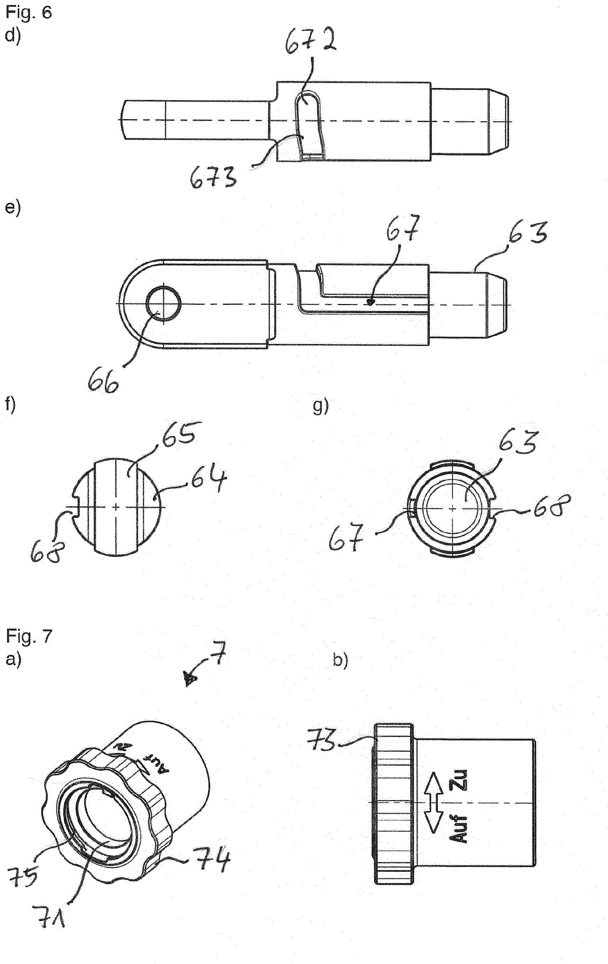

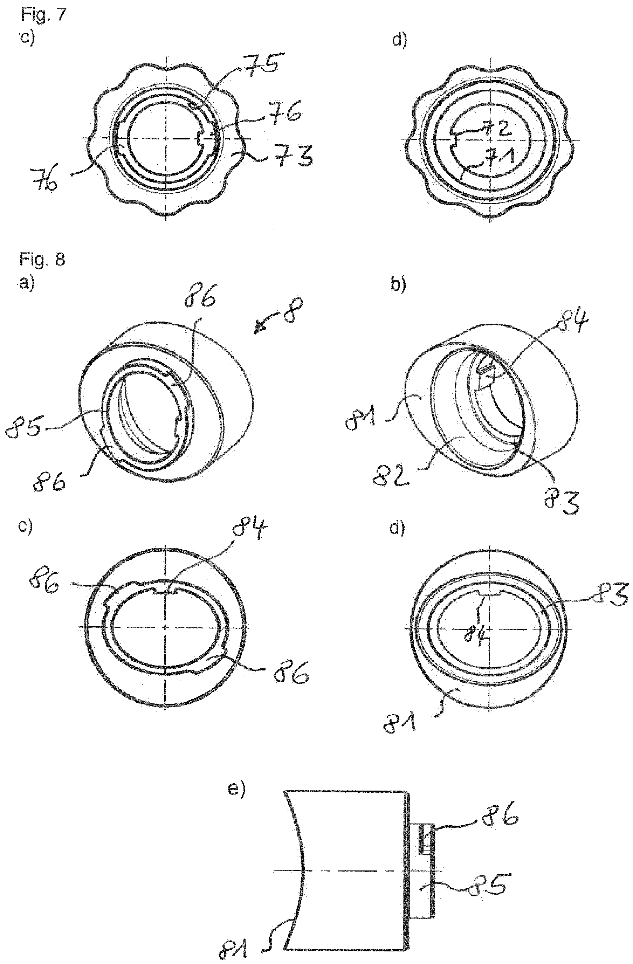

- Figur 7: die schematische Darstellung der Verriegelungshülse des Lenkers aus Figur 2
a) in einer räumlichen Darstellung;
b) in der Seitenansicht;
c) in der Draufsicht;
d) in der Ansicht von unten;
- Figur 8: die schematische Darstellung des Kupplungsteils des Lenkers aus Figur 2
a) in einer räumlichen Darstellung von vorne;
b) in einer räumlichen Darstellung von hinten;
c) in der Draufsicht;
d) in der Ansicht von unten;
e) in der Seitenansicht;

Der als Ausführungsbeispiel gewählte Elektroroller 1 umfasst eine Lenkstange 2 und ein Trittelement 3, die in bekannter Art und Weise über eine arretierbare Schwenkvorrichtung 21 zueinander schwenkbar miteinander verbunden sind. Die Lenkstange 2 ist zur Längenverstellung teleskopierbar ausgebildet und an einer Seite mit einem Vorderrad 22 sowie an der diesen gegenüberliegenden Seite mit einem einklappbar ausgebildeten Lenker 4 versehen. An dem Trittelement 3 ist heckseitig ein Hinterrad 31 über eine Hinterradschwinge 32 mit dem Trittelement 3 verbunden. Hinterrad 31 und Vorderrad 21 sind mit einem - nicht dargestellten - Elektroantrieb verbunden. Die Lenkstange 2 kann über die arretierbare Schwenkvorrichtung 21 in eine im Wesentlichen zum Trittelement 3 parallele Position verschwenkt werden.

Der Lenker 4 umfasst ein Mittelstück 5, an dessen beiden Seiten ein Griffstück 6 schwenkbar befestigt ist. Auf dem Griffstück 6 ist eine Verriegelungshülse 7 drehbar angeordnet, die mit einem Kupplungsstück 8 verbunden und über eine Schraubenfeder 9 gegen das Mittelstück 5 vorgespannt ist.

Das Mittelstück 5 umfasst einen länglichen Grundkörper 51 mit elliptischem Querschnitt, an dessen beiden Endseiten ein kegelstumfförmiges Ansatzstück 55 angeformt ist. Das Ansatzstück 55 ist gegenüber dem Grundkörper 51 durchmesserreduziert ausgebildet. Zwischen dem Ansatzstück 55 und der Außenmantefläche des Grundkörpers 51 ist eine unebene, umlaufende erste Flächenkontur 56 begrenzt.

Auf der Unterseite des Grundkörpers 51 ist an dessen beiden Enden jeweils ein Spalt 52 eingebracht, der durch das jeweilige Ansatzstück 55 hindurch geführt ist, jedoch die Mantelfläche der Oberseite des Grundkörpers 51 und die an diese angrenzende Flächenkontur 56 nicht durchdringt. Durch jeden der beiden Spalte 52 sind zwei gegenüberliegende Schenkel 53 begrenzt, die durch die verbliebene Mantelfläche der Oberseite des Grundkörpers 51, die im Bereich des jeweiligen Spaltes 52 einen Anschlag 54 ausbildet, verbunden sind. Jeweils durch zwei gegenüberliegende Schenkel 53 ist orthogonal zu dem Spalt 52 eine Bohrung 57 zur Durchführung einer Achse 58 eingebracht.

Das Griffstück 6 ist im Wesentlichen in Form eines Metallrohres 61 ausgebildet, das endseitig mit einem Handgriff 611 versehen ist. An seinem dem Handgriff 611 gegenüberliegenden Ende ist das Metallrohr 61 auf ein Verbindungsstück 62 aufgeschraubt.

Das Verbindungsstück 62 ist im Wesentlichen zylindrisch ausgebildet und im Ausführungsbeispiel als Gußteil, bevorzugt als Kunststoff- oder Metallgußteil hergestellt. An seinem dem Metallrohr 61 zugewandten Ende weist das Verbindungsstück 62 einen Gewindezapfen 63 auf, der mit dem Metallrohr 61 verschraubt ist. An den Gewindezapfen 63 ist ein durchmessererweiterter Abschnitt 64 angeformt, an den sich ein im wesentlichen quaderförmiger Schwenkabschnitt 65 anschließt, der endseitig in Art einer Halbkreisscheibe abgerundet ist. Konzentrisch zu dem Halbkreisbogen des abgerundeten Endes des Schwenkabschnitts 65 ist beabstandet zu diesem Halbkreisbogen eine Bohrung 66 durch den Schwenkabschnitt 65 eingebracht.

Im Flucht mit der Mittelachse M einer breiten Seite des Schwenkabschnitts 65 ist in die Mantelfläche des durchmessererweiterten Abschnitts 64 ein erster, axialer Abschnitt 671 einer Kulissenbahn 67 eingebracht, der sich von dem Gewindezapfen 63 bis unterhalb des gegenüberliegenden Endes des durchmessererweiterten Abschnitts 64 ertreckt, wo dieser in einen radial umlaufenden Abschnitt 672 übergeht, der einen axial ansteigenden Bereich 673 aufweist. Dem ersten, axialen Abschnitt 671 der Kulissenbahn 67 gegenüberliegend ist in den durchmessererweiterten Abschnitt 64 des Verbindungsstücks 62 eine über dessen gesamte Länge verlaufende Führungsnut 68 eingebracht.

Die Verriegelungshülse 7 ist im Wesentlichen zylinderrohrförmig ausgebildet und weist an einem Ende einen nach innen kragenden, umlaufenden Absatz 71 auf, dessen Innendurchmesser im Wesentlichen dem Außendurchmesser des durchmessererweiterten Abschnitts 64 des Verbindungsstücks 62 entspricht, auf dem er verschiebbar geführt ist. An den Absatz 71 ist ein radial nach innen kragender Zapfen 72 angeformt, der in die Kulissenbahn 67 des durchmessererweiterten Abschnitts 64 des Verbindungsstücks 62 eingreift. An seinem dem Absatz 71 zugewandten Ende ist an die Verriegelungshülse 7 ein Flanschteil 73 mit vergrößertem Außendurchmesseer angeformt, dessen radiale Außenmantelflläche 74 wellig ausgebildet ist und als Griffstück dient. Innen weist das Flanschteil 73 eine umlaufend Nut 75 auf, die auf einer Seite durch den Absatz 71 begrenzt ist.

Das Kupplungsstück 8 ist im Wesentlichen rohrförmig mit einem entsprechend dem Grundkörper 51 des Mittelstücks elliptischen Querschnitt ausgebildet und weist endseitig eine Anlagefläche mit einer unebenen zweiten Flächenkontur 81 auf, die mit der jeweils endseitig an dem Mittelstück vorhandenen Flächenkontur 65 korrespondiert. An die zweite Flächenkontur 81 schließt sich eine konisch zulaufende Innenkontur 82 an, die mit der Außenkontur des an beiden Enden des Mittelstücks 5 angeformten Ansatzstücks 55 korrespondiert.

Die Innenkontur 82 ist durch einen innendurchmesserreduzierten Absatz 83 begrenzt, der in einen Ringsteg 85 übergeht, der auf der der zweiten Flächenkontur 81 gegenüberliegenden Seite an des Kupplungsstück 8 angeformt ist. Der Ringsteg 85 ist in Art eines Bajonettrings an zwei gegenüberliegenden Seiten mit einem bereichsweise sich radial nach außen erstreckenden Kragen 86 versehen, die in die Nut 75 der Verriegelungshülse 7 eingreifen. An dem Absatz 83 ist übergehend in den Ringsteg 85 ein radial nach innen kragender Zapfen 84 angeformt, der in die Führungsnut des Verbindungsstücks 62 eingreift.

Zum Einbringen der beiden Kragen 86 des Ringsteges 85 in die Nut 75 der Verriegelungshülse 7 sind in die dem Absatz 83 abgewandte Begrenzungswand der Nut 75 zwei gegenüberliegend angeordnete Ausnehmungen 76 eingebracht, die derart dimensioniert sind, dass sie etwas größer sind, als die Kragen 86, die durch diese in die Nut 75 einbringbar sind.

Zwischen dem Verbindungsstück 62 und der auf diesem verschiebbar geführten Verriegelungshülse 7 ist ein Ringspalt 91 gebildet, in den eine Schraubenfeder 9 eingebracht ist, die an dem Absatz 71 anliegt. Mit ihrem gegenüberliegenden Ende liegt die Schraubenfeder 9 an einer Scheibe 92 an, die auf den Gewindezapfen 63 des Verbindungsstücks 62 aufgeschoben ist und die an dem durchmessererweiterten Abschnitt 64 anliegt, gegen den sie durch das Metallrohr 61, das auf den Gewindezapfen 63 aufgeschraubt, ist fixiert ist. Der Außendurchmesser der Scheibe 92 ist so gewählt, dass die Verriegelungshülse 7 gegen die Vorspannung der Schraubenfender 9 über die Scheibe 92 verschiebbar ist. An Stelle der Scheibe 92 kann auch ein umlaufender Kragen endseitig an das Metallrohr 61 angeformt sein.

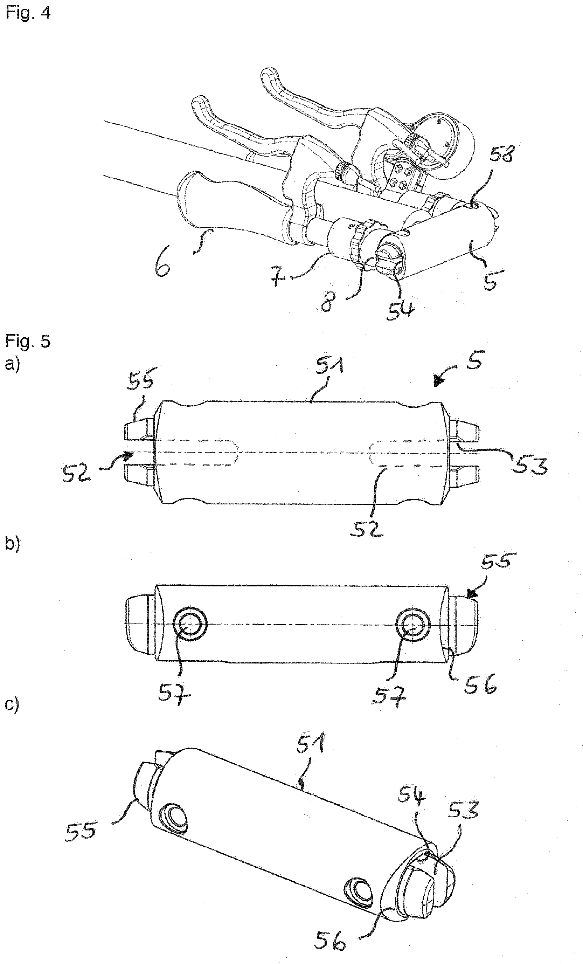

In Figur 4 ist der Lenker 4 in seiner Fahrposition gezeigt. Dabei sind die beiden Griffstücke 6 mit ihrem Verbindungsstück 62 und dem auf dieses aufgeschraubten Metallrohr 61 in Flucht mit dem Mittelstück 5. Das jeweilige Kupplungsstück 8 liegt mit seiner Flächenkontur 81 an der mit dieser korrespondierenden Flächenkontur 56 und mit seiner Innenkontur 82 an dem Ansatzstück 55 des Mittelstücks 5 an. Die mit dem Kupplungsstück 8 drehbar verbundene Verriegelungshülse 7 ist mit ihrem Zapfen 72 entlang des radial umlaufenden Abschnitts 672 der Kulissenbahn 67 des Verbindungsstücks 62 in diesen eingedreht. Dabei wurde der axial ansteigende Bereich 673 überfahren, wodurch die Verriegelungshülse 7 zusammen mit dem an dieser anliegenden Kupplungsstück 8 gegen das Mittelstück 5 gepresst und in dieser Position fixiert ist. Die schwenkbare Verbindung des jeweils zwischen den Schenkeln 53 eines Ansatzstückes 55 hindurchgeführten und über eine Achse 58 schwenkbar in dem Spalt 52 gehaltenen Schwenkabschnitts 65 des Verbindungsstücks 62 ist so durch das Kupplungsstück 8 blockiert.

Zum Einklappen eines Griffstücks 6 in die Faltposition wird die Verriegelungshülse 7 derart gedreht, dass ihr Zapfen 72 entlang des radial umlaufenden Abschnitts 672 der Kulissenbahn 67 des Verbindungsstücks 62 in den axialen Abschnitt 671 gelangt. Hierbei wird der axial ansteigende Bereich 673 überfahren, wodurch eine erste axiale Lockerung der Verbindung zwischen dem mit der Verriegelungshülse 7 verbundenen Kupplungsstück 8 und dem Mittelstück 5 bewirkt ist. Nachfolgend wird die Verriegelungshülse 7 mit ihrem Zapfen 72, der über den axialen Abschnitts 671 der Kulissenbahn 67 geführt ist, gemeinsam mit dem Kupplungsstück 8 entgegen der Vorspannung der Schraubenfeder 9 bewegt. Hierdurch wird das Kupplungsstück 8 von dem Ansatzstück 55 entfernt und die Blockierung der schwenkbaren Verbindung zwischen Mittelstück 5 und Verbindungsstück 62 wird aufgehoben. In diesem Zuge wird zugleich die Scheibe 92 von der Verriegelungshülse 7 überstülpt.

Nachfolgend wird das Griffstück 6 in die dem Anschlag 54 entgegengesetzte Richtung verschwenkt, bis es orthogonal zu dem Mittelstück 5 positioniert ist. Nach Loslassen der Verriegelungshülse 7 wird diese über die Rückstellkraft der Schraubenfeder 9 entlang des Verbindungsstücks 62 bewegt, bis das mit diesem verbundene Kupplungsstück 8 seitlich an dem Mittelstück 5 anliegt. In dieser Position befindet sich der Zapfen 72 der Verriegelungshülse an der Gabelung zwischen dem axialen Abschnitt 671 und dem radial umlaufenden Abschnitt 672 der Kurvenbahn 67 des Verbindungsstücks 62. Durch Verdrehen der Verriegelungshülse 7 wird dessen Zapfen 72 durch den radial umlaufenden Abschnitt 672 der Kulissenbahn 67 geführt, wobei der axial ansteigende Bereich 673 überfahren wird. Hierdurch wird die Verriegelungshülse 7 zusammen mit dem an dieser anliegenden Kupplungsstück 8 seitlich gegen das Mittelstück 5 gepresst und in dieser Position fixiert.

Durch die erfindungsgemäße Ausgestaltung des Lenkers 4 ist ein Verschwenken der Griffstücke 6 in die Fahrposition oder die Faltposition mit nachfolgender Fixierung durch fünf Schritte einfach realisierbar: Verdrehen der Verriegelungshülse 7 in die Öffnungsstellung (Zapfen 72 wird in den axialen Abschnitt 671 der Kulissenbahn 67 bewegt), Verschieben der Veriegelungshülse 7 entgegen der Vorspannung der Schraubenfeder 9, Verschwenken des Griffstücks 6 in die gewünschte Position, Loslassen der Verriegelungshülse 7, Verdrehen der Verriegelungshülse 7 in die Verriegelungsstellung (Zapfen 72 wird in den radial umlaufenden Abschnitt 672 der Kulissenbahn 67 bewegt).

## Patentansprüche

1. Lenker zur Befestigung an der Lenkstange (2) eines Zweirades, insbesondere eines Elektrorollers (1), umfassend ein Mittelstück (5), an dessen beiden Enden jeweils ein Griffstück (6) befestigt ist, das aus einer Fahrstellung in eine Faltstellung schwenkbar ist und das wenigstens in seiner Fahrstellung festlegbar ist, wobei auf dem Griffstück (6) eine Verriegelungshülse (7) drehbar angeordnet ist, die über ein Federelement gegen das Mittelstück (5) vorgespannt ist, **dadurch gekennzeichnet, dass** die Verriegelungshülse (7) einen radial nach innen kragenden Zapfen (72) aufweist, der in eine an dem Griffstück (6) angeordnete Kulissenbahn (67) eingreift, in der er geführt ist, wobei die Kulissenbahn (67) derart ausgebildet ist, dass die Verriegelungshülse (7) in einer ersten Drehstellung axial auf dem Griffstück (6) verschiebbar und in einer zweiten Drehstellung axial fixiert ist, wobei das Griffstück (6) ein Verbindungsstück (62) umfasst, das die Kulissenbahn (67) aufweist, und wobei das Verbindungsstück (62) endseitig einen Schwenkabschnitt (65) mit zwei planparallelen Flächen aufweist, der zwischen zwei Schenkeln (53) eingreift, die jeweils an beiden Enden des Mittelstücks (5) vorhanden sind und zwischen denen der Schwenkabschnitt (65) über eine Achse (58) schwenkbar gehalten ist, die durch eine durch die Schenkel (53) geführte Bohrung (57) geführt ist.

2. Lenker nach Anspruch 1, **dadurch gekennzeichnet, dass** die an beiden Enden des Mittelstücks (5) angeordneten Schenkel (53) jeweils einen Anschlag aufweisen, an dem der Schwenkabschnitt (65) des jeweiligen Griffstücks (6) in der Fahrstellung anliegt.

3. Lenker nach einem der vorgenannten Ansprüche, **dadurch gekennzeichnet, dass** die Kulissenbahn (67) einen axial verlaufenden Abschnitt (671) aufweist, der in einen radial umlaufenden Abschnitt (672) übergeht.

4. Lenker nach Anspruch 3, **dadurch gekennzeichnet, dass** der radial umlaufende Abschnitt (672) der Kulissenbahn (67) einen axial ansteigenden Bereich (673) aufweist.

5. Lenker nach einem der vorgenannten Ansprüche, **dadurch gekennzeichnet, dass** das Mittelstück (5) einen unrunden, vorzugsweise einen elliptischen Querschnitt aufweist.

6. Lenker nach einem der vorgenannten Ansprüche, **dadurch gekennzeichnet, dass** die Verriegelungshülse (7) an ihrem dem Mittelstück (5) zugewandten Ende an einem Kupplungsstück (8) anliegt, das auf dem Verbindungsstück (62) verschiebbar ist und das an seiner dem Mittelstück (5) zugewandten Seite eine zweite, unebene Flächenkontur (81) aufweist, die mit einer an dem Mittelstück (5) vorhandenen, ersten unebenen Flächenkontur (56) korrespondiert, an der das Kupplungsstück (8) in "Fahrstellung" des Griffteils (6) anliegt.

7. Lenker nach Anspruch 6, **dadurch gekennzeichnet, dass** die Verriegelungshülse (7) mit dem Kupplungsstück (8) drehbar verbunden ist.

8. Lenker nach Anspruch 7, **dadurch gekennzeichnet, dass** die Verriegelungshülse (7) eine umlaufende Nut (75) aufweist, in der ein zumindest bereichsweise umlaufend an dem Kupplungsteil (8) angeordneter Kragen (86) eingreift.

9. Lenker nach einem der Ansprüche 6 bis 8, **dadurch gekennzeichnet, dass** das Kupplungsstück (8) einen radial nach innen kragenden Zapfen (84) aufweist, der in eine außen an dem Verbindungsstück (62) vorhandene, axial verlaufende Führungsnut (68) eingreift.

10. Lenker nach einem der vorgenannten Ansprüche, **dadurch gekennzeichnet, dass** das Verbindungsstück (62) einen Gewindezapfen (63) aufweist, auf den ein Rohr, bevorzugt ein Metallrohr (61), aufgeschraubt ist oder dass das Verbindungsstück (62) an das Rohr angeformt ist.

11. Lenker nach einem der vorgenannten Ansprüche, **dadurch gekennzeichnet, dass** das Federelement durch eine Schraubenfeder (9) gebildet ist, die in einen zwischen dem Verbindungsstück (62) und der Verriegelungshülse (7) begrenzten Ringspalt angeordnet ist.

12. Zweirad, insbesondere Elektroroller (1), mit einer Lenkstange (2), die mit einem Lenker (4) nach einem der vorgenannten Ansprüche verbunden ist.

## Claims

1. Handlebar for fixing to a steering bar (2) of a two-wheeled vehicle, in particular an electric scooter (1), comprising a centre piece (5), on both ends of which a grip piece (6) is mounted in each case, which can be pivoted from a driving position into a folding position and which can be fixed at least in its driving position, wherein a locking sleeve (7) is rotatably arranged on the grip piece (6), which is pretensioned via a spring element against the centre piece (5), **characterised in that** the locking sleeve (7) has a radially inwardly projecting pin (72), which engages in a sliding track (67) arranged on the grip piece (6), in which it is guided, wherein the sliding track (67) is designed in such a manner that the locking sleeve (7) is axially displaceable on the grip piece (6) in a first rotational position and is axially fixed in a second rotational position, wherein the grip piece (6) comprises a connecting piece (62), which is provided with the sliding track (67) and wherein the connecting piece (62) has a pivoting section (65) at the end with two plane-parallel surfaces, which engages between two legs (53), which are provided in each case at both ends of the centre piece (5) and between which the pivoting section (65) is pivotably held via an axle (58), which is guided through a bore (57) passed through the legs (53).

2. Handlebar according to claim 1, **characterised in that** the two legs (53) arranged on both ends of the centre piece (5) each have a stop, against which the pivoting section (65) of the respective grip piece (6) rests in the driving position.

3. Handlebar according to one of the previous claims, **characterised in that** the sliding track (67) has an axially extending section (671), which merges into a radially circumferential section (672).

4. Handlebar according to claim 3, **characterised in that** the radially circumferential section (672) of the sliding track (67) has an axially rising area (673).

5. Handlebar according to one of the previous claims, **characterised in that** the centre piece (5) has a non-circular, preferably elliptical cross-section.

6. Handlebar according to one of the previous claims, **characterised in that** the locking sleeve (7) rests against a coupling piece (8) at its end facing the centre piece (5), which coupling piece is displaceable on the connecting piece (62) and has, on its side facing the centre piece (5), a second, uneven surface contour (81), which corresponds to a first uneven surface contour (56) provided on the centre piece (5), against which the coupling piece (8) rests in the "driving position" of the grip piece (6).

7. Handlebar according to claim 6, **characterised in that** the locking sleeve (7) is rotatably connected to the coupling piece (8).

8. Handlebar according to claim 7, **characterised in that** the locking sleeve (7) has a circumferential groove (75), in which an at least partially circumferential collar (86) arranged on the coupling part (8) engages.

9. Handlebar according to one of claims 6 to 8, **characterised in that** the coupling piece (8) has a radially inwardly projecting pin (84), which engages in an axially extending guide groove (68) provided on the outside of the connecting piece (62).

10. Handlebar according to one of the previous claims, **characterised in that** the connecting piece (62) has a threaded pin (63), onto which a tube, preferably a metal tube (61), is screwed or **in that** the connecting piece (62) is moulded onto the tube.

11. Handlebar according to one of the previous claims, **characterised in that** the spring element is formed by a helical spring (9), which is arranged in an annular gap delimited between the connecting piece (62) and the locking sleeve (7).

12. Two-wheeled vehicle, in particular electric scooter (1), with a steering bar (2), which is connected to a handlebar (4) according to one of the previous claims.

## Revendications

1. Guidon à fixer contre la barre de direction (2) d'un deux-roues, notamment d'une trottinette électrique (1), comprenant une pièce médiane (5) aux deux extrémités de laquelle est fixée une poignée (6) pouvant pivoter d'une position de conduite vers une position pliée et qui est immobilisable au moins sur sa position de conduite, sachant que sur la poignée (6) est disposée une douille de verrouillage (7) pouvant tourner, douille qui est précontrainte contre la pièce médiane (5) via un élément ressort, **caractérisé en ce que** la douille de verrouillage (7) présente un ergot (72) saillant vers l'intérieur, ergot qui engrène dans une piste glissière (67) qui lui sert de guidage et est disposée contre la poignée (6), sachant que la piste glissière (67) est configurée de telle sorte que la douille de verrouillage (7) est déplaçable axialement sur la poignée (6) dans une première position de rotation, et qu'elle est immobilisée axialement dans une deuxième position de rotation, sachant que la poignée (6) comprend une pièce liaison (62) qui présente la piste glissière (67), et sachant que la pièce de liaison (62) présente à son extrémité un segment pivotant (65) avec deux surfaces à plans parallèles, segment qui engrène entre deux branches (53) présentes chacune aux deux extrémités de la pièce médiane (5) et entre lesquelles le segment pivotant (65) est maintenu pivotant via un axe (58) qui traverse un alésage (57) passant à travers les branches (53).

2. Guidon selon la revendication 1, **caractérisé en ce que** les branches (53) disposées aux deux extrémités de la pièce médiane (5) présentent chacune une butée contre laquelle le segment pivotant (65) de la poignée respective (6) applique en position de conduite.

3. Guidon selon l'une des revendications précédentes, **caractérisé en ce que** la piste glissière (67) présente un segment (671) à tracé axial devenant un segment (672) à tracé radial périphérique.

4. Guidon selon la revendication 3, **caractérisé en ce que** le segment (672) à tracé radial périphérique de la piste glissière (67) présente une zone (673) montante axialement.

5. Guidon selon l'une des revendications précédentes, **caractérisé en ce que** la pièce médiane (5) présente une section non ronde, de préférence elliptique.

6. Guidon selon l'une des revendications précédentes, **caractérisé en ce que** la douille de verrouillage (7) applique - par son extrémité regardant la pièce médiane (5) - contre une pièce d'accouplement (8) qui est déplaçable sur la pièce de liaison (62) et qui, sur son côté regardant la pièce médiane (5), présente un second contour superficiel (81) non plan qui épouse un premier contour superficiel (56) non plan présent contre la pièce médiane (5), premier contour sur lequel applique la pièce d'accouplement (8) lorsque la poignée (6) se trouve en « position de conduite ».

7. Guidon selon la revendication 6, **caractérisé en ce que** la douille de verrouillage (7) est reliée, tout en pouvant tourner, avec la pièce d'accouplement (8).

8. Guidon selon la revendication 7, **caractérisé en ce que** la douille de verrouillage (7) présente une rainure périphérique (75) dans laquelle engrène un collet (86) disposé au moins localement en périphérie de la pièce d'accouplement (8).

9. Guidon selon l'une des revendications 6 à 8, **caractérisé en ce que** la pièce d'accouplement (8) présente un ergot (84) en saillie radiale vers l'intérieur, ergot qui engrène dans une rainure de guidage (68) au tracé axial présente contre la pièce de liaison (62).

10. Guidon selon l'une des revendications précédentes, **caractérisé en ce que** la pièce de liaison (62) présente un ergot fileté (63) sur lequel est vissé un tube, de préférence un tube métallique (61), ou **en ce que** la pièce de liaison (62) est modelée contre le tube.

11. Guidon selon l'une des revendications précédentes, **caractérisé en ce que** l'élément ressort est formé par un ressort hélicoïdal (9) disposé dans un interstice annulaire délimité par la pièce de liaison (62) et la douille de verrouillage (7).

12. Deux-roues, notamment trottinette électrique (1), comprenant une barre de direction (2) reliée à un guidon (4) selon l'une des revendications précédentes.
